# EUROPÄISCHE PATENTANMELDUNG

(11) **EP 0 739 829 A2**
(43) Veröffentlichungstag der Anmeldung: **30.10.1996**
(21) Anmeldenummer: 96104180.3
(22) Anmeldetag: 15.03.1996
(51) Int. Cl.: B65G 13/02, B65G 47/22

(54) **Vorrichtung zum Wenden von in einem Förderprozess befindlichen Produkten**

(30) Priorität: 25.04.1995 DE 19515201
(71) Anmelder: ALPENLAND MASCHINENBAU HAIN & CO. KG, 83543 Rott am Inn (DE)
(72) Erfinder: Fischer, Franz, Dr., 83209 Prien (DE); Gässler, Johann, 84478 Waldkraiburg (DE)
(74) Vertreter: Finsterwald, Martin, Dr.

(57) **Zusammenfassung**

Die Erfindung betrifft eine Vorrichtung zum Wenden von in einem Förderprozeß befindlichen, zwei einander gegenüberliegende Flachseiten aufweisenden Produkten, bei der entlang einer im wesentlichen in Förderrichtung verlaufenden Antriebsachse eine Mehrzahl von sich senkrecht zu dieser erstreckenden, gleichsinnig drehbaren Förderwalzen vorgesehen sind, daß sich die Drehachse der in Förderrichtung ersten Förderwalze im wesentlichen horizontal erstreckt, und daß die Drehachsen von in Förderrichtung auf die erste Förderwalze folgenden Förderwalzen mit der Horizontalen einen sich mit zunehmendem Abstand von der ersten Förderwalze sukzessive vergrößernden Winkel einschließen, wobei die Drehachse der in Förderrichtung letzten Förderwalze im wesentlichen vertikal verläuft.

## Beschreibung

Die Erfindung betrifft eine Vorrichtung zum Wenden von in einem Förderprozeß befindlichen, zwei einander gegenüberliegende Flachseiten aufweisenden Produkten.

Derartige Vorrichtungen werden beispielsweise beim Verpacken und anschließenden Etikettieren von Lebensmittelprodukten, insbesondere von scheibenweise aufgeschnittenem und portionsweise zu verpackendem Käse benötigt. Hierbei kommt es oftmals vor, daß verpackte Produkte auf einem Förderband mit obenliegender Siegelfalte transportiert werden und mit einem von oben aufzubringenden Preisetikett versehen werden müssen. Da das Preisetikett jedoch nicht auf die Siegelfalte aufgebracht werden kann, sondern auf einer siegelfaltenfreien Seite angebracht werden muß, ist es erforderlich, das im Förderprozeß befindliche Produkt um eine in der Förderebene verlaufende Achse derart zu drehen, daß die ursprünglich unten liegende siegelfaltenfreie Seite letztendlich oben zu liegen kommt, so daß das Preisetikett ohne Schwierigkeiten von oben aufgebracht werden kann.

Problematisch bei derartigen Vorrichtungen zum Wenden von in einem Förderprozeß befindlichen Produkten ist der zu betreibende hohe konstruktionstechnische Aufwand, welcher sich nachteilig auf die Wirtschaftlichkeit des Herstellungsprozesses und des Einsatzes derartiger Vorrichtungen auswirkt.

Eine Aufgabe der Erfindung besteht darin, eine Vorrichtung der eingangs angegebenen Art derart auszubilden, daß sie trotz geringer Herstellungs- und Wartungskosten einen fehlerfreien Betrieb und hohe Standzeiten ermöglicht.

Diese Aufgabe wird erfindungsgemäß dadurch gelöst, daß entlang einer im wesentlichen in Förderrichtung verlaufenden Antriebsachse eine Mehrzahl von sich senkrecht zu dieser erstreckenden, gleichsinnig drehbaren Förderwalzen vorgesehen sind, von denen zumindest eine über die Antriebsachse angetrieben ist, daß sich die Drehachse der in Förderrichtung ersten Förderwalze im wesentlichen horizontal erstreckt, und daß die Drehachsen von in Förderrichtung auf die erste Förderwalze folgenden Förderwalzen mit der Horizontalen einen sich mit zunehmendem Abstand von der ersten Förderwalze sukzessive vergrößernden Winkel einschließen, wobei die Drehachse der in Förderrichtung letzten Förderwalze im wesentlichen vertikal verläuft.

Die erfindungsgemäße Vorrichtung besteht demzufolge im wesentlichen aus einer Reihe von in Förderrichtung nacheinander angeordneten Förderwalzen. Die Drehachsen der Förderwalzen sind dabei mit zunehmendem Abstand von der in Förderrichtung ersten Förderwalze mit jeweils zunehmendem Schwenkwinkel aus der ursprünglich für den Förderprozeß maßgeblichen Förderebene nach oben herausgeschwenkt, wobei sich die in Förderrichtung letzte Förderwalze im wesentlichen senkrecht zur ursprünglichen Förderebene erstreckt. Auf diese Weise bilden die Oberflächen der einzelnen Förderwalzen eine Förderfläche, die in der Ebene eines gedachten langgestreckten Bandes liegt, dessen Enden gegeneinander um 90° verdreht sind.

Ein in die Vorrichtung einlaufendes Produkt wird durch die zunehmend gegenüber der ursprünglichen Förderebene geneigten Förderwalzen nach oben aus der ursprünglichen Förderebene herausgeschwenkt, wobei diese Schwenkbewegung um eine in Förderrichtung verlaufende Kante des Produktes erfolgt. Sobald das Produkt im Bereich der letzten Förderwalze im wesentlichen senkrecht auf der erwähnten Kante steht, wird aufgrund der durch den Wendevorgang erfolgten Beschleunigungskräfte oder eventuell zusätzlich angebrachter Führungselemente bewirkt, daß das aufgestellte und um 90° verschwenkte Produkt kippt und dadurch eine weitere Schwenkbewegung um 90° ausführt und auf seine vor dem Wendeprozeß ursprünglich oben liegende Flachseite fällt. Die ursprüngliche Oberseite, die beispielsweise eine Siegelfalte aufweist, kommt auf diese Weise nach dem Durchlaufen der erfindungsgemäßen Vorrichtung unten zu liegen, woraufhin auf die nunmehr oben liegende siegelfaltenfreie Seite ein Preisetikett aufgebracht werden kann.

Ein wesentlicher Vorteil der erfindungsgemäßen Vorrichtung besteht darin, daß einerseits alle anzutreibenden Förderwalzen über eine einzige Antriebsachse angetrieben sind und andererseits sämtliche Förderwalzen einschließlich den sie gegebenenfalls mit der Antriebsachse koppelnden Antriebselementen identisch ausgebildet werden können, wodurch sowohl ein konstruktionstechnisch einfach zu bewerkstelligender Antrieb als auch ein äußerst wirtschaftlicher Herstellungsprozeß der Gesamtanordnung ermöglicht wird.

Ein besonders vorteilhafter und konstruktionstechnisch mit geringem Aufwand verbundener Antrieb der Förderwalzen kann dadurch erfolgen, daß zumindest eine, vorzugsweise mehrere, insbesondere jede Förderwalze an ihrem der Antriebsachse zugewandten Ende mit einem zur jeweiligen Förderwalze koaxialen Kegelrad gekoppelt ist, welches jeweils mit einem der jeweiligen Förderwalze zugeordneten weiteren Kegelrad in Wirkverbindung steht, das koaxial zur Antriebsachse angeordnet und von dieser angetrieben ist.

Es ist grundsätzlich möglich, nur eine oder mehrere Förderwalzen anzutreiben, wobei zwischen den angetriebenen Förderwalzen nicht angetriebene Förderwalzen liegen. Diese nicht angetriebenen Förderwalzen können frei drehbar gelagert sein, so daß ihre Rotationsbewegung ausschließlich durch die von dem zu wendenden Produkt erzeugten Reibungskräfte hervorgerufen wird. Auf diese Weise lassen sich eine Reihe von Kegelrädern an der Antriebswalze und an den Förderwalzen einsparen.

Bei einer bevorzugten Ausführungsform der Erfindung werden die in Förderrichtung jeweils nacheinander angeordneten Förderwalzen insbesondere paarweise über umlaufende Förderriemen miteinander verbunden, wobei die Förderkräfte auf das zu wendende Produkt dann über die genannten Förderriemen übertragen werden.

Wenn nicht alle sondern nur einige oder auch nur eine der Förderwalzen mittels eines Kegelrads angetrieben werden, können die restlichen Förderwalzen, die über die Förderriemen mit der oder den mittels des Kegelrades angetriebenen Förderwalzen in Verbindung stehen, allein über die erwähnte Kopplung mittels der Förderriemen angetrieben werden, wobei die Förderriemen dabei mit ausreichender Spannung über zwei benachbarte Förderwalzen gezogen sein müssen, um ausreichende Reibungskräfte zu gewährleisten.

Die Förderwalzen können um die Antriebsachse zumindest in einem Winkelbereich von 90° schwenkbar und in verschiedenen Schwenkpositionen relativ zu einem stationären Rahmenbauteil fixierbar sein.

Um nach der Bewegung des zu wendenden Produkts in seine Vertikalstellung bzw. nach dessen Verschwenkung um 90° zu gewährleisten, daß das derart aufgestellte Produkt tatsächlich umkippt, dadurch um weitere 90° verschwenkt wird und schließlich auf der gewünschten Flachseite zu liegen kommt, kann die Drehachse der in Förderrichtung letzten Förderwalze oder der in Förderrichtung letzten Förderwalzen aus der Vertikalen geringfügig in Richtung der Förderebene eines das gewendete Produkt weiterfördernden Fördermittels geneigt sein.

Alternativ oder zusätzlich kann auch ein hinter der letzten Förderwalze angeordnetes Führungselement vorgesehen sein, welches ebenfalls die beschriebene Neigung aufweist.

Auf diese Weise erfährt das zu wendende Produkt eine geführte und kontrollierte Verschwenkung um etwas mehr als 90°, was letztendlich ein nachfolgendes Kippen und somit insgesamt ein Wenden des Produkts um 180° sicherstellt.

Von Vorteil ist es, wenn das stirnseitige, der Antriebsachse zugewandte Ende jeder Förderwalze in ein kreisscheibenförmiges Anschlag- und Förderelement übergeht, das konzentrisch zur jeweiligen Förderwalze ausgerichtet ist und einen größeren Durchmesser als die Förderwalze aufweist. Dabei ist es sinnvoll, das kreisscheibenförmige Anschlag- und Förderelement so zu bemessen, daß die Differenz der Radien der Förderwalze und des kreisscheibenförmigen Anschlag- und Förderelements der Produktdicke bzw. dem Abstand der beiden einander gegenüberliegenden Flachseiten des Produktes entspricht.

Das kreisscheibenförmige Anschlag- und Förderelement erfüllt zwei Funktionen:

Zum einen wird ein quer zur Förderrichtung erfolgendes Verrutschen des zu wendenden Produktes in Richtung der Antriebsachse bei zunehmender Steigung der Förderwalzen begrenzt, wodurch eine sichere Führung des Produktes während des Wendevorgangs gewährleistet und ein Herausfallen des Produktes aus der Vorrichtung verhindert wird.

Zum anderen übernehmen die mit den Förderwalzen rotierenden kreisscheibenförmigen Anschlag- und Förderelemente bei zunehmender Steigung der Förderwalzen auch einen zunehmenden Anteil der Förderfunktion, da mit zunehmender Steigung der Förderwalzen die Gewichtskraftkomponente des Produkts auf die Förderwalzen bzw. Förderriemen abnimmt, während die Gewichtskraftkomponente auf die kreisscheibenförmigen Anschlag- und Förderelemente in entsprechendem Maße zunimmt. Bei senkrecht stehender Förderwalze übernimmt das kreisscheibenförmige Anschlag- und Förderelement sogar die gesamte Förderfunktion, da in diesem Fall keinerlei Gewichtskraftkomponenten des Produktes mehr auf die Förderwalzen bzw. Förderriemen wirken.

Um eine möglichst gute Förderwirkung der kreisscheibenförmigen Anschlag- und Förderelemente zu erhalten, kann deren förderwalzenseitige Oberfläche einen hohen Reibungskoeffizienten aufweisen. Insbesondere ist es möglich, diese Oberfläche aufgerauht auszubilden oder aus Silikon zu fertigen.

Bezüglich der kreisscheibenförmigen Anschlag- und Förderelemente kann es auch sinnvoll sein, nur jede zweite Förderwalze mit einem derartigen Element zu versehen, dessen Durchmesser dann so groß zu bemessen ist, daß der äußere Umfang des kreisscheibenförmigen Anschlag- und Förderelements bis nahe an den Umfang der benachbarten Förderwalzen heranreicht, die keine derartigen Elemente tragen. Dies ist insbesondere dann von Vorteil, wenn ein größerer Durchmesser der Anschlag- und Förderelemente benötigt wird, um Produkte mit großer Dicke zu wenden.
In diesem Fall besteht aufgrund der jeweiligen, kein Anschlag- und Förderelement tragenden Förderwalze zwischen zwei benachbarten kreisscheibenförmigen Anschlag- und Förderelementen ein Spalt, welcher durch ein entsprechendes Führungselement mit möglichst glatter Oberfläche ausgeglichen werden muß, um eine sichere Führung der zu wendenden Produkte über die gesamte Förderstrecke zu gewährleisten.

Um zu gewährleisten, daß ein ablaufender Förderprozeß durch die erfindungsgemäße Vorrichtung zum Wenden der Produkte nicht gestört oder unterbrochen wird, kann die Drehzahl der Antriebsachse an die Geschwindigkeit des ablaufenden Förderprozesses anpaßbar sein. Durch eine Anpassung der Drehzahl der die jeweiligen Förderwalzen antreibenden Antriebsachse wird automatisch auch die Drehzahl dieser Förderwalzen und somit auch die durch die Förderwalzen bzw. Förderriemen bewirkte Produktfördergeschwindigkeit eingestellt.

Bei einer weiteren bevorzugten Ausführungsform der Erfindung erstreckt sich im wesentlichen parallel zur Antriebsachse über deren gesamte Länge ein Fördermittel mit horizontaler Förderebene, wobei wahlweise dieses Fördermittel oder die das Wenden der Produkte bewirkenden Förderwalzen in den Förderprozeß einkoppelbar sind. Auf diese Weise ist der Wendeprozeß wahlweise dem Förderprozeß zuschaltbar.

Weitere bevorzugte Ausführungsformen der Erfindung sind in den Unteransprüchen angegeben.

Die Erfindung wird nachfolgend anhand von Ausführungsbeispielen unter Bezugnahme auf die Zeichnung beschrieben; es zeigt:
- Figur 1: eine Draufsicht auf den Anfangsbereich einer erfindungsgemäßen Vorrichtung,
- Figur 2: eine in Förderrichtung gerichtete schematische Ansicht einer erfindungsgemäßen Vorrichtung, und
- Figur 3: eine Möglichkeit der Fixierung einer Förderwalze unter bezogen auf die Antriebsachse verschiedenen Schwenkwinkeln.

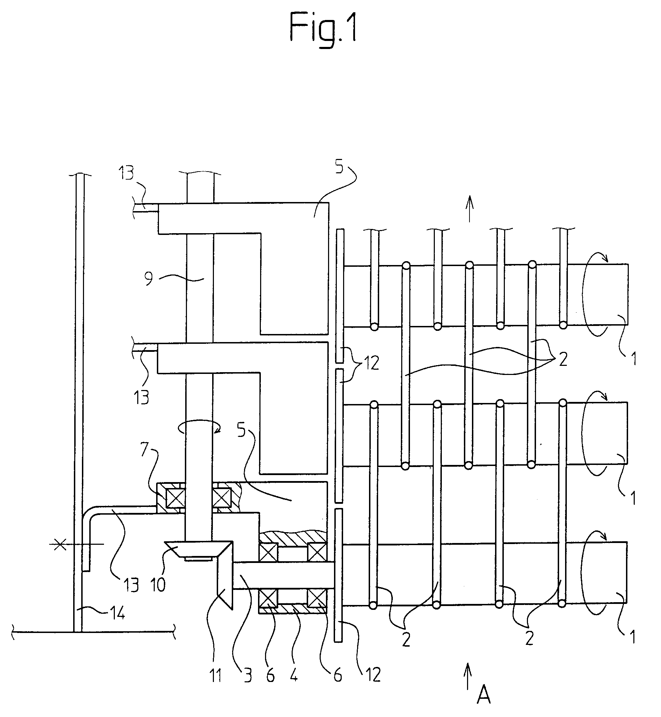

Figur 1 zeigt die in Förderrichtung ersten drei Förderwalzen 1 einer erfindungsgemäßen Vorrichtung, wobei jeweils benachbarte Förderwalzen miteinander über umlaufende Förderriemen 2 verbunden sind, die insbesondere in Umfangsnuten der Förderwalzen laufen.

Bei der in Figur 1 dargestellten Vorrichtung sind benachbarte Förderwalzen 1 jeweils abwechselnd über drei bzw. vier Förderriemen 2 verbunden, welche zueinander jeweils in Richtung der Drehachsen der Förderwalzen 1 versetzt sind. Die Förderriemen 2, die insbesondere elastisch ausgebildet sind, können erfindungsgemäß beispielsweise auch durch einzelne Förderbänder ersetzt werden, wobei bezüglich der Anzahl der Förderriemen 1 bzw. Förderbänder auch weniger als drei oder mehr als vier einsetzbar sind.

Die Längserstreckung der Förderwalzen 1 ist an die Breite der zu wendenden Produkte angepaßt.

An einem ihrer stirnseitigen Enden sind die Förderwalzen 1 mit einer koaxialen Achse 3 versehen, welche sich durch einen Schenkel 4 eines Winkelträgers 5 erstreckt und in diesem über Lager 6 drehbar gehalten ist.

Der andere Schenkel 7 des Winkelträgers 4 ist ebenfalls mit einem Lager 8 versehen, über das der Winkelträger 5 drehbar mit einer senkrecht zu den Förderwalzen 1 verlaufenden Antriebsachse 9 verbunden ist.

Die Antriebsachse 9 trägt ein fest mit ihr verbundenes Kegelrad 10, welches in Eingriff mit einem weiteren Kegelrad 11 steht, das am stirnseitigen, der Förderwalze 1 abgewandten Ende der Achse 3 fest angebracht ist. Die Drehachsen der beiden Kegelräder 10 und 11 verlaufen entsprechend der Orientierung von Antriebsachse 9 und Achse 3 senkrecht zueinander.

Beim Antrieb der Antriebsachse 9 in Pfeilrichtung wird über die Kegelräder 10, 11 auch die Achse 3 beaufschlagt, die fest mit der Förderwalze 1 in Verbindung steht, wodurch letztendlich auch eine Drehung der Förderwalze 1 in Pfeilrichtung bewirkt wird.

Der beschriebene Antriebsmechanismus ist in gleicher Weise für alle weiteren Förderwalzen der Vorrichtung vorgesehen und lediglich aus Gründen der Übersichtlichkeit in Figur 1 nur für eine Förderwalze 1 dargestellt. Dies bedeutet, daß die Antriebsachse 9 mit einer Anzahl von äquidistant angeordneten und fest mit ihr verbundenen Kegelrädern 10 versehen ist, wobei jedes dieser Kegelräder 10 genau einer Förderwalze 1 zum Zwecke deren Antriebs zugeordnet ist.

Durch die beschriebene Antriebsvorrichtung ist folglich auf einfache Weise eine gleichsinnige, synchrone und mit gleicher Geschwindigkeit erfolgende Drehung aller Förderwalzen 1 möglich, indem lediglich die Antriebsachse 9 von einem geeigneten, in Figur 1 nicht dargestellten Antriebselement beaufschlagt wird.

In Figur 1 ist zwischen der Achse 3 und dem der Antriebsachse 9 zugewandten stirnseitigen Ende der Förderwalzen 1 jeweils ein kreisscheibenförmiges Anschlag- und Förderelement 12 gezeigt, dessen Funktion vorstehend bereits eingehend erläutert wurde.

Der sich um die Antriebsachse 9 erstreckende Schenkel 7 des Winkelträgers 5 ist mit einer Lasche 13 fest verbunden, über die der Winkelträger 5 an einem stationären Rahmenbauteil 14 fixierbar ist.

Erfindungsgemäß ist vorgesehen, daß sich die Drehachse der in Förderrichtung A ersten Förderwalze im wesentlichen horizontal, das heißt in der Zeichenebene der Figur 1 erstreckt, und daß die Drehachsen von in Förderrichtung A auf die erste Förderwalze folgenden Förderwalzen mit der Horizontalen bzw. der Zeichenebene einen sich mit zunehmendem Abstand von der ersten Förderwalze sukzessive vergrößernden Winkel einschließen, wobei die Drehachse der in Förderrichtung letzten Förderwalze, die in Figur 1 nicht dargestellt ist, im wesentlichen vertikal, das heißt senkrecht zur zeichenebene der Figur 1 verläuft.

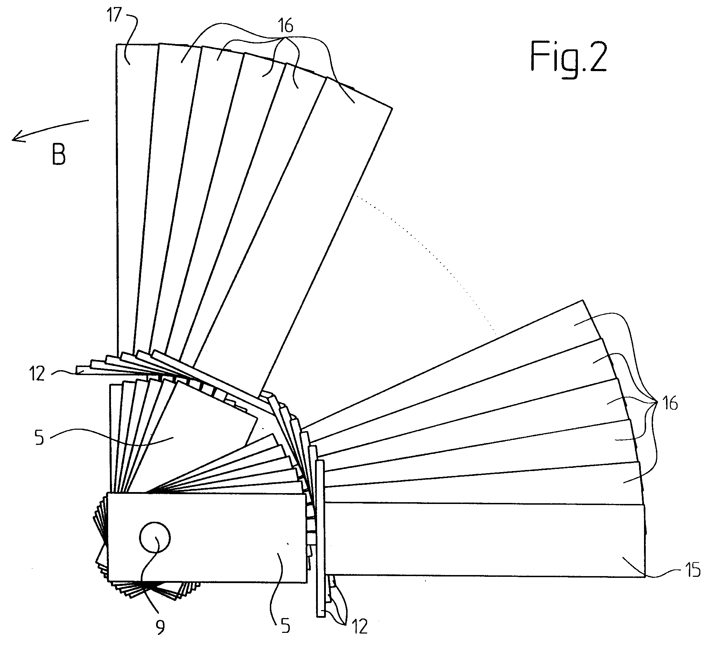

Diese Anordnung der Förderwalzen wird durch Figur 2 veranschaulicht.

Die unterschiedliche Verschwenkung der einzelnen Förderwalzen gegenüber der Horizontalen wird bei einer Anordnung gemäß Figur 1 - wie erwähnt - dadurch erreicht, daß der Winkelträger 5 um die Antriebsachse 9 gedreht und mittels der Lasche 13 an dem stationären Rahmenbauteil in der gewünschten Position fixiert wird.

Alternativ zu dieser Anordnung ließe sich auch eine Ausführungsform denken, bei der der Winkelträger 5 gelenkig ausgebildet ist, das heißt, der die Antriebsachse 9 tragende Schenkel 7 des Winkelträgers 5 wäre in diesem Fall stationär, wobei der andere Schenkel 4, an welchem die Förderwalze 1 gehalten ist, gegenüber dem stationären Schenkel 7 um eine parallel zur Antriebsachse 9 verlaufende Achse schwenkbar und in verschiedenen Schwenkpositionen fixierbar sein könnte.

Figur 2 zeigt die in Förderrichtung ersten und letzten Förderwalzen einer erfindungsgemäßen Vorrichtung, wobei hier eine stirnseitige Draufsicht auf die erfindungsgemäße Vorrichtung in Richtung des die Förderrichtung symbolisierenden Pfeiles A gemäß Figur 1 dargestellt ist. Die Förderriemen 2 sind in Figur 2 aus Gründen der Übersichtlichkeit nicht dargestellt.

Alle in Figur 2 gezeigten Förderwalzen 15, 16, 17 sind identisch ausgebildet und jeweils in einem Winkelträger 5 drehbar gehalten, wobei im Winkelträger 5 nicht dargestellte Antriebselemente enthalten sind. Diese Antriebselemente zum drehenden Antrieb der Förderwalzen 15, 16, 17 werden von einer sich durch einen Schenkel des Winkelträgers 5 erstreckenden Antriebsachse 9 angetrieben.

Die Förderwalzen 15, 16, 17 sind ebenso wie die Förderwalzen 1 gemäß Figur 1 an ihrem der Antriebsachse 9 zugewandten stirnseitigen Ende jeweils mit einem Anschlag- und Führungselement 12 versehen.

Aus Gründen der Übersichtlichkeit sind in Figur 2 lediglich die in Förderrichtung ersten sechs und letzten sechs Förderwalzen 15, 16, 17, gezeigt, während die dazwischenliegenden Förderwalzen lediglich durch Punkte angedeutet sind. Insgesamt können beispielsweise sechzehn Förderwalzen vorgesehen werden.

Die in Förderrichtung erste Förderwalze 15 ist horizontal ausgerichtet und wird in der Weise in einen ablaufenden Förderprozeß integriert, daß sich ihre obere Mantellinie im wesentlichen in der Förderebene eines Produkte der erfindungsgemäßen Vorrichtung zuführenden Fördermittels erstreckt. Auf diese Weise wird eine reibungslose Übergabe der Produkte von einem im ablaufenden Förderprozeß eingesetzten Fördermittel an die erfindungsgemäße Vorrichtung ermöglicht.

Die auf die erste Förderwalze 15 folgenden Förderwalzen 16 schließen mit zunehmendem Abstand von der ersten Förderwalze 15 mit der Horizontalen einen sich sukzessive vergrößernden Winkel ein, was bedeutet, daß die Förderwalzen 16 mit zunehmendem Abstand von der ersten Förderwalze 15 zunehmend stark um die Antriebsachse 9 verschwenkt sind.

Der Schwenkwinkel der in Förderrichtung letzten Förderwalze 17 beträgt dabei ungefähr 90°.

Wenn nun ein Produkt der erfindungsgemäßen Vorrichtung zugeführt wird, erfolgt ein Transport dieses Produktes mittels der zwischen den Förderwalzen 15, 16, 17 angeordneten Förderriemen entlang der durch die Förderwalzen 15, 16, 17 bzw. deren Förderriemen gebildeten Förderfläche, wobei ein ursprünglich auf einer seiner Flachseiten aufliegendes Produkt im Bereich der letzten Förderwalze 17 derart aufgestellt ist, daß seine beiden Flachseiten im wesentlichen senkrecht verlaufen.

Durch mittels dieses Aufstellvorgangs bewirkte Beschleunigungskräfte oder auch durch zusätzliche Führungselemente wird erreicht, daß das aufgestellte Produkt in Richtung des Pfeiles B umkippt und dadurch eine weitere Verschwenkung um 90° erfährt, so daß das Produkt gegenüber seiner ursprünglichen Lage um 180° gewendet wird. Die ursprünglich unten liegende Flachseite des Produktes kommt auf diese Weise oben zu liegen.

Durch den Kippvorgang fällt das Produkt auf ein den weiteren Fördervorgang übernehmendes und in Fig. 2 nicht dargestelltes Fördermittel.

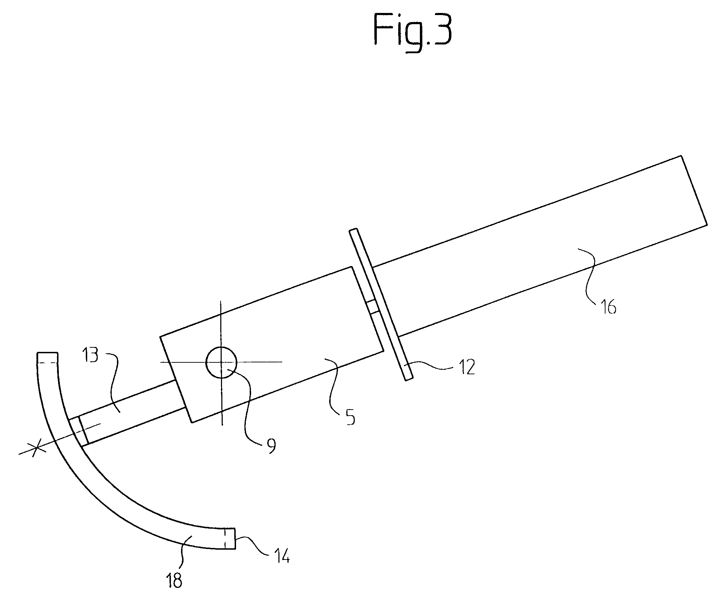

Figur 3 zeigt eine Möglichkeit der Fixierung der Förderwalzen bzw. der mit Ihnen verbundenen Winkelträger 5 unter verschiedenen Schwenkwinkeln.

Die auch in Figur 1 dargestellte Lasche 13 erstreckt sich bis zu dem stationären Rahmenbauteil 14, welches in Form einer sich zumindest über einen Winkelbereich von 90° erstreckenden Rinne ausgebildet ist.

Diese Rinne ist dabei derart gekrümmt, daß sie sich konzentrisch zur Antriebsachse 9 erstreckt.

Für jede Förderwalze ist in dem rinnenartigen Rahmenbauteil 14 ein Schlitz 18 vorgesehen, welcher in einer senkrecht zur Antriebsachse 9 angeordneten Ebene verläuft.

Bei einem Verschwenken der Förderwalze 16 um die Antriebsachse 9 wird die Lasche 13 somit entlang des ihr zugeordneten Schlitzes 18 an der Innenseite des rinnenartigen Rahmenbauteils 14 bewegt, wobei die Lasche 13 beispielweise mittels einer den Schlitz 18 durchgreifenden Feststellschraube relativ zum Rahmenbauteil 14 fixierbar ist.

Bei der beschriebenen Befestigungsmöglichkeit wird vermieden, daß die Förderwalzen bzw. die ihr zugeordneten Winkelträger in verschiedenen Winkellagen individuell mit Rahmenbauteilen verbunden bzw. verschweißt werden müssen, da mit der in Figur 3 gezeigten Vorrichtung nach dem Herstellungsprozeß auf einfache Weise manuell die gewünschte Winkeleinstellung erhalten werden kann. Zudem ist mit dieser Vorrichtung auch nach der Inbetriebnahme noch eine an die jeweiligen Anforderungen angepaßte Feineinstellung oder Nachjustierung der Förderwalzen möglich.

### Bezugszeichenliste

- 1: Förderwalze
- 2: Förderriemen
- 3: Achse
- 4: Schenkel
- 5: Winkelträger
- 6: Lager
- 7: Schenkel
- 8: Lager
- 9: Antriebsachse
- 10: Kegelrad
- 11: Kegelrad
- 12: Anschlag- und Förderelement
- 13: Lasche
- 14: Rahmenbauteil
- 15: Förderwalze
- 16: Förderwalze
- 17: Förderwalze
- 18: Schlitz
- A: Förderrichtung
- B: Kipprichtung

## Patentansprüche

1. Vorrichtung zum Wenden von in einem Förderprozeß befindlichen, zwei einander gegenüberliegende Flachseiten aufweisenden Produkten,
dadurch **gekennzeichnet,**
daß entlang einer im wesentlichen in Förderrichtung (A) verlaufenden Antriebsachse (9) eine Mehrzahl von sich senkrecht zu dieser erstreckenden, gleichsinnig drehbaren Förderwalzen (1, 15-17) vorgesehen sind, von denen zumindest eine über die Antriebsachse (9) angetrieben ist, daß sich die Drehachse der in Förderrichtung (A) ersten Förderwalze (15) im wesentlichen horizontal erstreckt, und daß die Drehachsen von in Förderrichtung (A) auf die erste Förderwalze (15) folgenden Förderwalzen (16, 17) mit der Horizontalen einen sich mit zunehmendem Abstand von der ersten Förderwalze (15) sukzessive vergrößernden Winkel einschließen, wobei die Drehachse der in Förderrichtung letzten Förderwalze (17) im wesentlichen vertikal verläuft.

2. Vorrichtung nach Anspruch 1,
dadurch **gekennzeichnet,**
daß die angetriebenen Förderwalzen (1, 15-17) von einer einzigen Antriebsachse (9) angetrieben sind und/oder daß jeweils benachbarte Förderwalzen (1, 15-17) miteinander über umlaufende Förderriemen (2) verbunden sind.

3. Vorrichtung nach einem der vorhergehenden Ansprüche,
dadurch **gekennzeichnet,**
daß zumindest eine, insbesondere jede Förderwalze (1, 15-17) an ihrem der Antriebsachse (9) zugewandten Ende mit einem zur jeweiligen Förderwalze (1, 15-17) koaxialen Kegelrad (11) gekoppelt ist, welches jeweils mit einem der jeweiligen Förderwalze (1, 15-17) zugeordneten weiteren Kegelrad (10) in Wirkverbindung steht, das koaxial zur Antriebsachse (9) angeordnet und von dieser angetrieben ist.

4. Vorrichtung nach einem der vorhergehenden Ansprüche,
dadurch **gekennzeichnet,**
daß die Förderwalzen (1, 15-17) um die Antriebsachse (9) zumindest in einem Winkelbereich von 90° schwenkbar und in verschiedenen Schwenkpositionen relativ zu einem stationären Rahmenbauteil (14) fixierbar sind, und/oder daß die Drehachse der in Förderrichtung letzten Förderwalze aus der Vertikalen geringfügig in Richtung der Förderebene eines das gewendete Produkt weiterfördernden Fördermittels geneigt ist, und/oder daß in Förderrichtung hinter der letzten Förderwalze ein Führungselement angeordnet ist, das aus der Vertikalen geringfügig in Richtung der Förderebene eines das gewendete Produkt weiterfördernden Fördermittels geneigt ist.

5. Vorrichtung nach einem der vorhergehenden Ansprüche,
dadurch **gekennzeichnet,**
daß das stirnseitige, der Antriebsachse (9) zugewandte Ende zumindest jeder zweiten Förderwalze (1, 15-17) in ein kreisscheibenförmiges Anschlag- und Förderelement (12) übergeht, das konzentrisch zur jeweiligen Förderwalze (1, 15-17) ausgerichtet ist und einen größeren Durchmesser als die Förderwalze (1, 15-17) aufweist, wobei insbesondere die Differenz der Radien der Förderwalze (1, 15-17) und des kreisscheibenförmigen Anschlag- und Förderelements (12) der Produktdicke bzw. dem Abstand der beiden einander gegenüberliegenden Flachseiten des Produktes entspricht.

6. Vorrichtung nach Anspruch 5,
dadurch **gekennzeichnet,**
daß die förderwalzenseitige Oberfläche des kreisscheibenförmigen Anschlag- und Förderelements (12) einen hohen Reibungskoeffizienten aufweist und insbesondere aufgerauht ist oder aus Silikon besteht.

7. Vorrichtung nach einem der vorhergehenden Ansprüche,
dadurch **gekennzeichnet,**
daß die Drehzahl der Antriebsachse (9) und damit die Drehzahl der Förderwalzen (1, 15-17) und die Fördergeschwindigkeit der Förderriemen (2) einstellbar und somit an die Geschwindigkeit des Förderprozesses anpaßbar ist.

8. Vorrichtung nach einem der vorhergehenden Ansprüche,
dadurch **gekennzeichnet,**
daß sich im wesentlichen parallel zur Antriebsachse über deren gesamte Länge ein Fördermittel mit horizontaler Förderebene erstreckt und wahlweise dieses Fördermittel oder die das Wenden der Produkte bewirkenden Förderwalzen in den Förderprozeß einkoppelbar sind.

9. Vorrichtung nach einem der vorhergehenden Ansprüche,
dadurch **gekennzeichnet,**
daß zwischen 10 und 20, insbesondere 16 Förderwalzen (1, 15-17) vorgesehen sind.

10. Vorrichtung nach einem der vorhergehenden Ansprüche,
dadurch **gekennzeichnet,**
daß die Förderriemen (2) elastisch ausgebildet sind, und/oder daß benachbarte Förderwalzen (1, 15-17) über 3 oder 4 Förderriemen (2) miteinander verbunden sind.
